# EUROPEAN PATENT SPECIFICATION

(11) **EP 3 402 761 B1**
(45) Date of publication and mention of the grant of the patent: **25.03.2020**
(21) Application number: 16747644.9
(22) Date of filing: 21.06.2016
(51) Int. Cl.: C03C 17/36

(54) **A LOW-E COATED GLASS WHICH IS RESISTANT TO THERMAL PROCESS**
GEGEN THERMISCHES VERFAHREN BESTÄNDIGES BESCHICHTETES GLAS MIT GERINGER EMISSIVITÄT
VERRE ENDUIT À FAIBLE ÉMISSIVITÉ ET RÉSISTANT AU PROCESSUS THERMIQUE

(30) Priority: 11.01.2016 TR 201600378
(43) Date of publication of application: 21.11.2018
(73) Proprietor: Türkiye Sise Ve Cam Fabrikalari A.S., 34947 Tuzla (TR)
(72) Inventor: TURKUZ, Seniz, 34330 Istanbul (TR); GOREN, Behic Kerem, 34330 Istanbul (TR); ISMAIL, Hasan, 34330 Istanbul (TR); DENIZ, Birsel, Kocaeli (TR)
(74) Representative: Kaya, Erdem
(86) International application number: PCT/TR2016/050184
(87) International publication number: WO 2017/123169

(56) References cited:
- WO-A1-2010/126564
- WO-A1-2014/078054
- WO-A1-2014/078062
- WO-A1-2015/034798
- WO-A2-2005/016839
- WO-A2-2005/019125

## Description

### TECHNICAL FIELD

The present invention relates to a bendable low-e coated glass which can be tempered and whose selectivity is increased and which is coated with pluralities of metal, metal oxide and nitride and/or oxy-nitride layers by using sputtering method in vacuum medium.

### PRIOR ART

One of the factors affecting the optical properties of glasses is the coating application made onto the glass surface. One of the coating applications is the sputtering method. Particularly this is a method which is frequently used in production of architectural coatings with low radiation. The transmittance and reflection values in the visible and infrared region of the glasses coated by means of said method can be adjusted to the desired levels.

Besides the transmittance and reflection values, selectivity value in the coated glasses is an important parameter. In the ISO 9050 (2003) standard, selectivity is defined as the proportion of the visible region transmittance value to the solar factor. The number of Ag layers comprised by the coating, the used coring layer type, and the parametric optimizations of the layers and the selectivity values of the coatings can be kept at the aimed levels.

In the patent with publication number WO2007080428, there is a coated glass pane with a low-e (low-emission) and/or solar control coating comprising - in sequence from the glass surface - at least the following layers: - a lower anti-reflection layer comprising a base layer of an (oxy)nitride of aluminum and a metal oxide top layer, - a silver-based functional layer, - a barrier layer, - an upper anti-reflection layer comprising a core layer of a metal oxide and an outermost protective layer wherein - the lower anti-reflection layer further comprises a middle layer of an oxide of Sn or of a mixture of Zn and Sn between its base layer and its top layer, and - the core layer of the upper anti-reflection layer comprises an oxide of Zn and Sn.

In the patent with publication number EP2716442, there is a low emissivity coating stack having a low emissivity for heat rays and having high visible light transmittance and near infrared transmittance. A low emissivity coating stack comprising a transparent substrate, and a thin film laminate portion having at least a first titanium oxide-containing layer containing an oxide of titanium, a low emissivity metal layer containing silver as the main component and a second titanium oxide-containing layer containing an oxide of titanium formed in this order on the transparent substrate, which has a surface resistivity of at most 3.3 CR / and has a solar heat gain coefficient (SHGC) of at least 0.60 when formed into double glazing glass.

In the patent with publication number WO2010126564, there is a coated article including a low-E coating. In certain example embodiments, a titanium oxide inclusive bottom layer stack and/or a NiCr-based layer(s) are designed to improve b* coloration values and/or transmission of the coated article. These layer stack portions also are advantageous in that they permit a double-silver coated article to achieve (i) an LSG value (TVIS/SHGC) of at least 2.0, (ii) an SHGC value of no greater than 35%, more preferably no greater than 33, 32 or 30%, and (iii) a U-value (BTU h-1 ft-2 °F-1) (e.g., x=12mm) of no greater than 0.30, more preferably no greater than 0.28 or 0.25. In certain example embodiments, the titanium oxide based layer may be an interlayer provided in a bottom portion of the layer stack between first and second layers comprising silicon nitride. Coated articles according to certain example embodiments of this invention may be used in the context of insulating glass (IG) window units, other types of windows, or in any other suitable application.

### BRIEF DESCRIPTION OF THE INVENTION

The present invention relates to a bendable low-e coated glass which can be tempered and whose selectivity is increased, for eliminating the above mentioned disadvantages and for bringing new advantages to the related technical field.

The main object of the present invention is to provide a low-e coated glass whose selectivity is increased.

Another object of the present invention is to provide a low-e coated glass to which thermal process can be applied.

In order to realize all of the abovementioned objects and the objects which are to be deducted from the detailed description below, the present invention is a double silvered low-e coated glass according to claim 1. This double silvered low-e coated glass is resistant to thermal process and which provides efficient solar control with low solar factor and which allows penetration of the daylight into the medium and which minimizes thermal energy loss. Accordingly, the subject matter low-e coating is characterized in that said low-e coating comprises SixNy/TiOx/ZnAlOx respectively as the first three layers outwardly from the glass surface, and the proportion of the thickness of the first Ag layer to the thickness of the second Ag layer is in the range of 0.6-1.5. Thus, mechanical, thermal and corrosion resistance can be obtained which is aimed at accurate optimization of the triple layer group SixNy/TiOx/ZnAlOx. By means of the optimization of the thickness proportion of the Ag layers, low inner and outer reflection values are obtained in the visible region.

In a preferred embodiment of the subject matter invention, the thickness of the Ag layers of the low-e coating is in the range of 8.5-14.5 nm.

In a preferred embodiment of the subject matter invention, the thickness of the Ag layers of the low-e coating is in the range of 10-13 nm.

In a preferred embodiment of the subject matter invention, the radiation value of the low-e coating prior to thermal process is lower than 0.038.

In a preferred embodiment of the subject matter invention, the surface resistance of the low-e coating prior to thermal process is lower than 3 Ω/square.

In a preferred embodiment of the subject matter invention, the ZnAlOx layers of the low-e coating, which are positioned in the vicinity of the Ag layers, comprise NiCrOx layers positioned in the other vicinities of the Ag layers.

In a preferred embodiment of the subject matter invention, the proportion of the first coring layer thickness of the low-e coating to the first barrier layer thickness is in the range of 12-23.

In a preferred embodiment of the subject matter invention, the proportion of the second coring layer thickness of the low-e coating to the second barrier layer thickness is in the range of 8-16.

In a preferred embodiment of the subject matter invention, said low-e coating comprises ZnSnOx and SiOxNy respectively in the final two layers.

In a preferred embodiment of the subject matter invention, the proportion of the total of the thickness of the ZnAlOx layer and the thickness of the SixNy layer, positioned in the glass vicinity of the low-e coating, to the TiOx layer thickness provided between the two layers is in the range of 4-7. Thus, as a result of the thermal process, mechanical resistance is increased.

In a preferred embodiment of the subject matter invention, the proportion of the total of the thickness of the ZnAlOx layer and the thickness of the SixNy layer, positioned in the glass vicinity of the low-e coating, to the TiOx layer thickness provided between the two layers is in the range of 4-6.2.

In a preferred embodiment of the subject matter invention, the proportion of thickness of the SixNy layer, positioned in the glass vicinity of the low-e coating, to the thickness of the ZnAlOx layer is in the range of 0.6-1.6.

In a preferred embodiment of the subject matter invention, the proportion of thickness of the SixNy layer, positioned in the glass vicinity of the low-e coating, to the thickness of the ZnAlOx layer is in the range of 0.8-1.4.

In a preferred embodiment of the subject matter invention, the proportion of the thickness of said ZnSnOx layer to the thickness of SiOxNy layer is in the range of 0.1-0.6.

In a preferred embodiment of the subject matter invention, the proportion of the thickness of said ZnSnOx layer to the thickness of SiOxNy layer is in the range of 0.1-0.5.

In a preferred embodiment of the subject matter invention, the total thickness of the last two layers of the low-e coating is in the range of 33-50 nm.

### BRIEF DESCRIPTION OF THE FIGURES

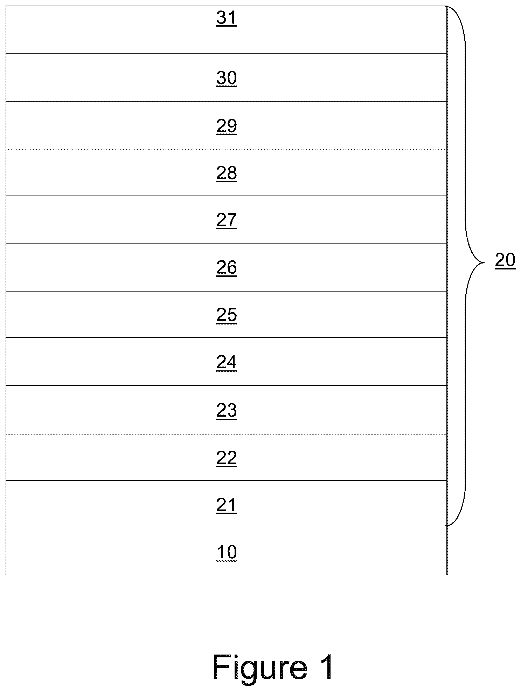

In Figure 1, a representative view of the low-e coating arrangement applied to the glass surface is given.

### REFERENCE NUMBERS

10 Glass
20 Low-e coating
21 First dielectric layer
22 Second dielectric layer
23 First coring layer
24 First infrared reflective layer
25 First barrier layer
26 Middle dielectric structure
27 Second coring layer
28 Second infrared reflective layer
29 Second barrier layer
30 Third dielectric layer
31 Upper dielectric structure

### THE DETAILED DESCRIPTION OF THE INVENTION

In this detailed description, the subject matter low-e coated (20) glass (10) is explained with references to examples without forming any restrictive effect only in order to make the subject more understandable.

The production of low-e coated (20) glasses (10) related to architecture and automotive is realized by means of the sputtering method. The present invention generally relates to double silvered low-e coated (20) glasses (10) having high thermal process resistance and used as daylight and heat insulation glass (10), and relates to the ingredient and application of said low-e coating (20).

In the subject matter invention, a low-e coating (20) has been developed comprising pluralities of metal, metal oxide and metal nitride/oxy-nitride layers on the glass (10) surface by using the sputter method in order to obtain a low-e coated (20) glass (10) which can be thermally processed and having high visible light transmittance for application onto a glass (10) surface. Said layers are accumulated onto each other respectively in vacuum. As the thermal process, at least one and/or some of tempering, partial tempering, bending, annealing and ridging processes can be used. The subject matter low-e coated (20) glass (10) can be used as architectural and automotive glass (10).

The following data have been detected as a result of the experimental studies in order to develop the most ideal low-e coating (20) arrangement which can be thermally processed in terms of production easiness and in terms of optical properties.

In case the layer structure comprises more than two barrier layers, the visible region transmittance is reduced. Since the layer structure comprises the layer produced from ceramic ZAO target, haziness occurs on the low-e coating (20) after thermal process.

The final layer of the low-e coating (20) is an upper dielectric structure (31). In case the SiOx layer and TiOx layer are used together as the upper dielectric structure (31), the mechanical resistance of the low-e coating (20) weakens after the thermal process, and micro scratches occur on the low-e coating (20) surface.

In case the SiOxNy layer, which is the upper dielectric structure (31), is used so as to be in direct contact with NiCrOx which is the second barrier layer (29), the NiCrOx layer and the SiOxNy layer show incompliant behavior and delaminating occurs after the thermal process. Therefore, a third dielectric layer (30) is added between SiOxNy, which is the upper dielectric structure (31), and the NiCrOx layer which is the second barrier layer (29) provided in the low-e coating (20), and the adherence performance between the layers is increased. ZnSnOx layer is used as the third dielectric layer (30).

In case SiOxNy layer is used instead of the SixNy layer as the upper dielectric structure (31), since the refraction index of the SiOxNy layer is lower than the refraction index of the SixNy layer, the same optical behavior can be obtained by means of a thicker SiOxNy layer. Thus, the mechanical resistance of the coating is increased by using a thicker upper dielectric structure (31).

By using high index materials like TiOx layer inside the arrangement, the desired transmittance and reflectance values are obtained. In the subject matter low-e coating (20), the layer, which transmits the visible region better and which provides reflectance of the thermal radiation (less transmits) in the infrared spectrum, is a first infrared reflective layer (24) and a second infrared reflective layer (28). As the first infrared reflective layer (24) and as the second infrared reflective layer (28), Ag layer is used and its radiation is low.

In the subject matter low-e coated (20) glass (10), the refraction indexes of all layers are determined by means of methods with calculation through optic constants obtained by means of single layer measurements taken. Said refraction indexes are the refraction index data at 550 nm.

In the subject matter coating, a first dielectric layer (21) is used as the lowermost layer in a manner contacting the glass. Said first dielectric layer (21) comprises at least one of SixNy, TiNx, ZrNx layers. In the preferred application, SixNy layer is used as the first dielectric layer (21). SixNy layer acts as a diffusion barrier and it prevents alkali ion migration facilitated at high temperature. Thus, it provides resistance to thermal process. Since silicium oxide is the main component of the soda-lime-silicate glass, the SixNy layer holds very well to the glass and to the other layer in the vicinity of the glass. The change of the refraction index of the SixNy layer is in the range of 2.06 and 2.08. In the preferred application, said refraction index is 2.07. The thickness of the SixNy layer is in the range of 10 nm - 35 nm. In the preferred application, the thickness of the SixNy layer is in the range of 15 nm - 30 nm. In the more preferred application, thickness of the SixNy layer is in the range of 18 nm - 25 nm.

A second dielectric layer (22) is positioned on the SixNy layer. Said second dielectric layer (22) comprises at least one of TiOx, ZrOx, NbOx layers. In the preferred application, TiOx is used as the second dielectric layer (22). Since the TiOx layer is a material having high refraction index, it provides the same optical performance with less thickness, and it increases the transmittance performance of the low-e coating (20). The refraction index of the TiOx layer existing after the SixNy layer is in the range of 2.44 and 2.49. In the preferred application, said refraction index is 2.48. The thickness of the TiOx layer is in the range of 4 nm - 15 nm. In the preferred application, the thickness of the TiOx layer is in the range of 5 nm - 13 nm. In the more preferred application, the thickness of the TiOx layer is in the range of 6 nm - 12 nm.

When the SixNy and TiOx layers, existing after the glass as the first and second layers, are used together, it is possible to optimize the optical performance by means of using thinner SixNy layer thanks to the high refraction index of the TiOx layer. Thanks to the high refraction indexes, the use of SixNy and TiOx layers provides obtaining sufficient optical performance by means of less thickness and provides energy efficiency in production.

A first coring layer (23) is positioned under the first infrared reflective layer (24). A second coring layer (27) is positioned under the second infrared reflective layer (28). The first coring layer (23) and the second coring layer (27) comprise at least one of ZnAlOx, ZnInOx, ZnO and ZnGaOx. In the preferred application, ZnAlOx is used as the first coring layer (23) and the second coring layer (27). The ZnAlOx layers grow in a columnar manner with the desired poly-crystalline structure provided in the crystal field model. By means of this, Ag islands grow on a smoother substrate. Thus, high selectivity values aimed in the product can be provided. The refractive index for the ZnAlOx layer is in the range of 2.01-2.06. In the preferred application, ZnAlOx layer is used having refractive index value of 2.01. The thickness of the ZnAlOx layer is in the range of 10 nm - 30 nm. In the preferred application, the thickness of the ZnAlOx layer is in the range of 13 nm - 25 nm. In the more preferred application, the thickness of the ZnAlOx layer is in the range of 15 nm - 23 nm.

In order for the percolation limit of the Ag layer to be as low as possible and in order for the Ag film to produce a stable film with the minimum thickness possible, the ZnAlOx layer, which is the coring layer under the Ag layer, shall be as smooth as possible. Therefore, the size of the particle existing in the ZnAlOx layer coated in poly-crystalline structure shall be as small as the process permits. Thus, the coating parameters of the ZnAlOx layer are very critical. The coating parameters of the ZnAlOx layer are given below.

**Table 1: Coating parameters of the ZnAlOx layer**

| **Power Value** | **Gas Flow Rate (sccm)** | | **Layer coating speed** |
|---|---|---|---|
| Minimum 60 kW | Ar | O₂ | Minimum 45 nm*m/minute |
| | 400 - 1000 | 500 - 1300 | |

In the subject matter low-e coating (20), the proportion of the thickness of the SixNy layer, positioned in the vicinity of the glass (10), to the thickness of the ZnAlOx layer is in the range of 0.6-1.6. Preferably the proportion of the thickness of the SixNy layer, positioned in the vicinity of the glass (10), to the thickness of the ZnAlOx layer is in the range of 0.8-1.4. In the mostly preferred application, the proportion of the thickness of the SixNy layer, positioned in the vicinity of the glass, to the thickness of the ZnAlOx layer is in the range of 1-1.3.

In the 70/40 (Tvis/SHGC) band which is the performance family of the subject matter invention in this arrangement, in order to obtain the acceptable negative and neutral transmittance and reflection values for the products for architectural usage, the thicknesses of the first infrared reflective layer (24) and the second infrared reflective layer (28) are in the range of 8.5 nm - 14.5 nm. In this case, the proportion of the thickness of the Ag layer, which is the first infrared reflective layer (24), to the thickness of the Ag layer, which is the second infrared reflective layer (28), is in the range of 0.6 and 1.5. More precisely, the thicknesses of the first infrared reflective layer (24) and the second infrared reflective layer (28) are in the range of 10 nm - 13 nm. In this case, the proportion of the thickness of the Ag layer, which is the first infrared reflective layer (24), to the thickness of the Ag layer, which is the second infrared reflective layer (28), is in the range of 0.8 - 1.2. More specifically, the thicknesses of the first infrared reflective layer (24) and the second infrared reflective layer (28) are in the range of 11 nm - 13 nm. In this case, the proportion of the thickness of the Ag layer, which is the first infrared reflective layer (24), to the thickness of the Ag layer, which is the second infrared reflective layer (28), is in the range of 0.9 - 1. In order to reach the aimed performance value and in order to obtain low inner and outer reflection values in the visible region and in order to obtain the desired color properties, the proportion of the thickness of the Ag layer, which is the first infrared reflective layer (24), to the thickness of the Ag layer, which is the second infrared reflective layer (28), is in the range of 0.9 - 1. In the visible region transmittance, the aimed performance value is 71%±2. The total solar power transmittance is 43% ±1. Moreover, by means of the optimization of all other dielectric layers, this performance shall be supported.

In the subject matter low-e coating (20), there is a first barrier layer (25) and there is a second barrier layer (29). It comprises at least one of NiCr, NiCrOx, Ti or NiCrFeOx layers as the first barrier layer (25) and as the second barrier layer (29). In the preferred application, NiCrOx layer is used as the first barrier layer (25) and as the second barrier layer (29). The thickness of the NiCrOx layer is in the range of 0.3 nm - 2 nm. In the preferred application, the thickness of the NiCrOx layer is in the range of 0.5 nm - 1.7 nm. In the more preferred application, the thickness of the NiCrOx layer is in the range of 0.9 - 1.6 nm.

The NiCrOx layers, used as the first barrier layer (25) and the second barrier layer (29), are used for preventing the Ag layers from being affected by the process gases used for the production of layers provided after the Ag layers. At the same time, the NiCrOx layers compensate the probable adherence weakness prior to the thermal process by providing structural compliancy in the metallic and dielectric transition between the dielectric layers existing after the Ag layers. Moreover, the NiCrOx layers prevent the Ag layers from deteriorating as a result of oxidization during the thermal process. The NiCrOx layers have refraction index values in the range of 1.8 - 2.3. Preferably the refraction index of the NiCrOx layers is in the range of 1.9-2.2. In the more preferred application, the refraction index of the NiCrOx layers is in the range of 2.0-2.1.

In the low-e coating (20), a middle dielectric structure (26) is positioned between the NiCrOx layer which is the first barrier layer (25) and the ZnAlOx layer which is the second coring layer (27). The middle dielectric structure (26) comprises at least one of ZnSnOx, SnOx and CdZnOx layers. In the preferred embodiment, ZnSnOx layer is used as the middle dielectric structure (26). The thickness of the ZnSnOx layer is in the range of 45 nm - 85 nm. In the preferred application, the thickness of the ZnSnOx layer is in the range of 50 nm - 80 nm. In the more preferred application, the thickness of the ZnSnOx layer is in the range of 55 nm - 75 nm.

In the low-e coating (20), a third dielectric layer (30) is positioned on the NiCrOx layer which is the second barrier layer (29). The third dielectric layer (30) comprises at least one of the ZnSnOx, SnOx and CdZnOx layers. In the preferred embodiment, ZnSnOx layer is used as the third dielectric layer (30). The thickness of the ZnSnOx layer is in the range of 7 nm - 15 nm. In the preferred application, the thickness of the ZnSnOx layer is in the range of 7 nm - 13 nm. In the more preferred application, the thickness of the ZnSnOx layer is in the range of 7 nm - 11 nm.

On the third dielectric layer (30), an upper dielectric structure (31) is positioned as the final layer of the low-e coating (20). Said upper dielectric structure (31) comprises at least one of the SiOxNy, AlOxNy and TiOxNy layers. SiOxNy layer is used as the upper dielectric structure (31). The thickness of the SiOxNy layer is in the range of 20 nm - 46 nm. In the preferred application, the thickness of the SiOxNy layer is in the range of 23 nm - 40 nm. In the more preferred application, the thickness of the SiOxNy layer is in the range of 26 nm - 38 nm.

In the layer arrangement provided in the subject matter invention, the ZnSnOx layer and the SiOxNy layer are used together which are the final layers outwardly with respect to the glass. In this case, the ZnSnOx layer is positioned between the NiCrOx layer provided under it and the SiOxNy layer provided above it. Thus, the adhesion weakness, which will occur in case the NiCrOx layer and the SiOxNy layer are coated one above the other, is prevented, and the mechanical resistance is increased. As a result of the tests made, it has been determined that said ZnSnOx layer shall have a thickness of at least 7 nm for providing an efficient adhesion. A continuous film structure above 7 nm is formed, thus, the SiOxNy layer grows on the ZnSnOx layer, and the mechanical resistance of the coating is provided. In the present invention, for an ideal mechanical resistance, the proportion of the thickness of the ZnSnOx layer to the thickness of the SiOxNy layer is in the range of 0.1 and 0.6. Preferably, the proportion of the thickness of the ZnSnOx layer to the thickness of the SiOxNy layer is in the range of 0.1 and 0.5. In the more preferred embodiment, the proportion of the thickness of the ZnSnOx layer to the thickness of the SiOxNy layer is in the range of 0.2 and 0.4. In this case, the total thickness of the ZnSnOx layer and the SiOxNy layer is in the range of 33 nm - 50 nm. Preferably, the total thickness of the ZnSnOx layer and the SiOxNy layer is in the range of 35-47 nm. In the more preferred application, the total thickness of the ZnSnOx layer and the SiOxNy layer is in the range of 35-45 nm. Outside this range, the mechanical resistance weakens again. In the alternative embodiment of the present invention, SixNy layer can also be used as the final layer. For the SiOxNy layer, the refraction index is between 1.8 and 1.98. In the preferred application, the refraction index is 1.96.

The proportion of the thickness of the first coring layer (23) of the low-e coating (20) to the thickness of the first barrier layer (25) is in the range of 12-23. The proportion of the thickness of the first coring layer (23) of the low-e coating (20) to the thickness of the first barrier layer (25) is in the range of 15-21. In the more preferred application, the proportion of the thickness of the first coring layer (23) of the low-e coating (20) to the thickness of the first barrier layer (25) is in the range of 15-18.

The proportion of the thickness of the second coring layer (27) of the low-e coating (20) to the thickness of the second barrier layer (29) is in the range of 8-16. The proportion of the thickness of the second coring layer (27) of the low-e coating (20) to the thickness of the second barrier layer (29) is preferably in the range of 9-14. In the more preferred application, the proportion of the thickness of the second coring layer (27) of the low-e coating (20) to the thickness of the second barrier layer (29) is in the range of 10-13.

In the present invention, the evaluation of the SixNy/TiOx/ZnAlOx layers, which are the first three layers, as a group bears critical importance. The proportion of the total of the thicknesses of the SixNy layer and ZnAlOx layer to the thickness of the TiOx layer provided between the two layers is in the range of 4 - 7. Preferably the proportion of the total of the thicknesses of the SixNy layer and ZnAlOx layer to the thickness of the TiOx layer provided between the two layers is in the range of 4 - 6.2. In the more preferred application, the proportion of the total of the thicknesses of the SixNy layer and ZnAlOx layer to the thickness of the TiOx layer, provided between the two layers, is in the range of 4-5.7. In this case, the mechanical and corrosion resistance increase and reach the most ideal level. In this invention, in order for the general mechanical and corrosion resistance to be provided at the ideal level, the proportion of the thickness of the SixNy layer to the thickness of the ZnAlOx layer, which is the first coring layer (23), is in the range of 0.6 - 1.6. Preferably, the proportion of the thickness of the SixNy layer to the thickness of the ZnAlOx layer, which is the first coring layer (23), is in the range of 0.8 - 1.4. In the more preferred application, the proportion of the thickness of the SixNy layer to the thickness of the ZnAlOx layer, which is the first coring layer (23), is in the range of 1.0-1.3.

Before and after the thermal process, the selectivity is between 1.6 - 1.7. The realization of the optical change in a manner not affecting the selectivity performance is an indicator that the initial coating parameters of all of the layers are efficiently optimized.

In this product aimed at 70/40, when similar performance is tried to be approached by means of a design with single Ag layer, it has been observed that the visible reflection increases much and that the reflection color tends to be red color in an undesired manner. Since the transmittance color tends to be yellow color in an undesired manner in the interventions to be made in order to eliminate the red color in the reflection, the desired performance has been obtained only by means of the two Ag layered system.

This performance can be obtained in the structure with three Ag layers, and the three Ag layered structure is an expensive product and it is mechanically more sensitive. The balancing of the tensions between the layers in the three Ag layered structure is more difficult when compared with a structure with two Ag layers. Therefore, in order to obtain a product whose mechanical resistance is higher, a two Ag layered structure is preferred.

This product has a structure with two Ag layers; it can permit the daylight to enter into the medium in winter (71±2) and it minimizes thermal energy loss through it. At the same time, it provides efficient solar control also in summer by means of the low solar factor (43±2), and it provides saving from the air-conditioner expenditures in hot places, and it provides fresh ambiance by means of lower energy. Said low-e coated (20) glass (10) can be used in thermal insulation units comprising two or more glass (10) plates.

The subject matter low-e coated (20) glass (10) used in thermal insulation units has a radiation value of 0.038 prior to the thermal process. In the measurement made after the thermal process, the radiation value of the low-e coated (20) glass (10) is lower than 0.030. The surface resistance of the low-e coating (20) is lower than 3 Ω/square before the thermal process. The surface resistance of the low-e coating (20) is lower than 2.5 Ω/square before the thermal process. The surface resistance measurement is realized by means of contact from four points.

## Claims

1. A double silvered low-e coated (20) glass (10) which is resistant to thermal process and which provides efficient solar control with low solar factor and which allows penetration of the daylight into the medium and which minimizes thermal energy loss, **characterized in that** said low-e coating (20) comprises SixNy(21)/TiOx(22)/ZnAlOx(23) respectively as the first three layers outwardly from the glass (10) surface, ZnAlOx(23) being a first coring layer and the proportion of the thickness of the first Ag layer (24) to the thickness of the second Ag layer (28) is in the range of 0.6-1.5. and said low-e coating (20) respectively comprises the following after the first three layers:
- a first infrared reflective layer Ag layer (24) positioned on the first coring layer ZnAlOx (23),
- a first barrier layer (25) comprising NiCrOx positioned on the first infrared reflective layer (24),
- a middle dielectric structure (26) comprising ZnSnOx positioned on the first barrier layer (25),
- a second coring layer (27) comprising ZnAlOx positioned on the middle dielectric structure (26),
- a second infrared reflective layer Ag layer (28) positioned on the second coring layer (27),
- a second barrier layer (29) comprising NiCrOx positioned on the second infrared reflective layer (28),
- a third dielectric layer (30) comprising ZnSnOx positioned on the second barrier layer (29),
- an upper dielectric structure (31) comprising SiOxNy positioned on the third dielectric layer (30).

2. A double silvered low-e coated (20) glass (10) according to Claim 1, **characterized in that** the thickness of the Ag layers of the low-e coating (20) is in the range of 8.5-14.5 nm.

3. A double silvered low-e coated (20) glass (10) according to Claim 1, **characterized in that** the thickness of the Ag layers of the low-e coating (20) is in the range of 10-13 nm.

4. A double silvered low-e coated (20) glass (10) according to Claim 1, **characterized in that** the proportion of the first coring layer ZnAlOx (23) thickness of the low-e coating (20) to the first barrier layer (25) thickness is in the range of 12-23.

5. A double silvered low-e coated (20) glass (10) according to Claim 1, **characterized in that** the proportion of the second coring layer (27) thickness of the low-e coating (20) to the second barrier layer (29) thickness is in the range of 8-16.

6. A double silvered low-e coated (20) glass (10) according to Claim 1, **characterized in that** the proportion of the total of the thickness of the first coring layer ZnAlOx (23) and the thickness of the SixNy layer, positioned in the glass (10) vicinity of the low-e coating (20), to the TiOx layer thickness provided between the two layers is in the range of 4-7.

7. A double silvered low-e coated (20) glass (10) according to Claim 1, **characterized in that** the proportion of thickness of the SixNy layer, positioned in the glass (10) vicinity of the low-e coating (20), to the thickness of the first coring layer ZnAlOx (23) is in the range of 0.6-1.6.

8. A double silvered low-e coated (20) glass (10) according to Claim 1, **characterized in that** the proportion of thickness of the SixNy layer, positioned in the glass (10) vicinity of the low-e coating (20), to the thickness of the first coring layer ZnAlOx (23) is in the range of 0.8-1.4.

9. A double silvered low-e coated (20) glass (10) according to Claim 1, **characterized in that** the proportion of the thickness of said ZnSnOx layer to the thickness of SiOxNy layer is in the range of 0.1-0.6.

10. A double silvered low-e coated (20) glass (10) according to Claim 1, **characterized in that** the proportion of the thickness of said ZnSnOx layer to the thickness of SiOxNy layer is in the range of 0.1-0.5.

11. A double silvered low-e coated (20) glass (10) according to Claim 9, **characterized in that** the total thickness of the last two layers of the low-e coating (20) is in the range of 33-50 nm.

12. A double silvered low-e coated (20) glass (10) according to Claim 1, **characterized in that** the daylight transmittance is 71±2 and the solar factor is 43±2.

13. A double silvered low-e coated (20) glass (10) according to Claim 1, **characterized in that** before and after the thermal process, the selectivity is defined as the proportion of the visible region transmittance value to the solar factor is between 1.6 - 1.7.

## Patentansprüche

1. Zweifach versilbertes Glas (10) mit Low-e-Beschichtung (20), das beständig gegen Wärmebehandlung ist, eine effiziente Solarkontrolle mit niedrigem Sonnenfaktor bereitstellt, das Eindringen von Tageslicht in das Medium ermöglicht und den Verlust thermischer Energie minimiert, **dadurch gekennzeichnet, dass** die Low-e-Beschichtung (20) von der Glasoberfläche (10) nach außen hin als die ersten drei Schichten SixNy (21) / TiOx (22) / ZnAlOx (23) umfasst, wobei ZnAlOx (23) die erste Kernschicht bildet, wobei die Schichtdicke der ersten Ag-Schicht (24) zur Schichtdicke der zweiten Ag-Schicht (28) in einem Verhältnis von 0.6 bis 1.5 steht und wobei die Low-e-Beschichtung (20) nach den ersten drei Schichten folgendes umfasst:
- eine erste infrarotreflektierende Ag-Schicht (24), die auf der ersten Kernschicht aus ZnAlOx (23) angeordnet ist,
- eine erste Sperrschicht (25) aus NiCrOx, die auf der ersten infrarotreflektierenden Schicht (24) angeordnet ist,
- eine mittlere dielektrische Struktur (26) aus ZnSnOx, die auf der ersten Sperrschicht (25) angeordnet ist,
- eine zweite Kernschicht (27) aus ZnAlOx, die auf der mittleren dielektrischen Struktur (26) angeordnet ist,
- eine zweite infrarotreflektierende Ag-Schicht (28), die auf der zweiten Kernschicht (27) angeordnet ist,
- eine zweite Sperrschicht (29) aus NiCrOx, die auf der zweiten infrarotreflektierenden Schicht (28) angeordnet ist,
- eine dritte dielektrische Schicht (30) aus ZnSnOx, die auf der zweiten Sperrschicht (29) angeordnet ist,
- eine obere dielektrische Struktur (31) aus SiOxNy, die auf der dritten dielektrischen Schicht (30) angeordnet ist.

2. Zweifach versilbertes Glas (10) mit Low-e-Beschichtung (20) nach Anspruch 1, **dadurch gekennzeichnet, dass** die Schichtdicke der Ag-Schichten innerhalb der Low-e-Beschichtung (20) im Bereich von 8,5 bis 14,5 nm liegt.

3. Zweifach versilbertes Glas (10) mit Low-e-Beschichtung (20) nach Anspruch 1, **dadurch gekennzeichnet, dass** die Schichtdicke der Ag-Schichten innerhalb der Low-e-Beschichtung (20) im Bereich von 10 bis 13 nm liegt.

4. Zweifach versilbertes Glas (10) mit Low-e-Beschichtung (20) nach Anspruch 1, **dadurch gekennzeichnet, dass** die Schichtdicke der ersten Kernschicht aus ZnAlOx (23) innerhalb der Low-e-Beschichtung (20) zur Schichtdicke der ersten Sperrschicht (25) in einem Verhältnis von 12 bis 23 steht.

5. Zweifach versilbertes Glas (10) mit Low-e-Beschichtung (20) nach Anspruch 1, **dadurch gekennzeichnet, dass** die Schichtdicke der zweiten Kernschicht (27) innerhalb der Low-e-Beschichtung (20) zur Schichtdicke der zweiten Sperrschicht (29) in einem Verhältnis von 8 bis 16 steht.

6. Zweifach versilbertes Glas (10) mit Low-e-Beschichtung (20) nach Anspruch 1, **dadurch gekennzeichnet, dass** die Gesamtschichtdicke bestehend aus der Schichtdicke der ersten Kernschicht aus ZnAlOx (23) und der Schichtdicke der SixNy-Schicht, die innerhalb der Low-e-Beschichtung (20) an das Glas (10) angrenzend angeordnet ist, zur Schichtdicke der TiOx-Schicht in einem Verhältnis von 4 bis 7 steht.

7. Zweifach versilbertes Glas (10) mit Low-e-Beschichtung (20) nach Anspruch 1, **dadurch gekennzeichnet, dass** die Schichtdicke der SixNy-Schicht, die innerhalb der Low-e-Beschichtung (20) an das Glas (10) angrenzend angeordnet ist, zur Schichtdicke der ersten Kernschicht aus ZnAlOx (23) in einem Verhältnis von 0,6 bis 1,6 steht.

8. Zweifach versilbertes Glas (10) mit Low-e-Beschichtung (20) nach Anspruch 1, **dadurch gekennzeichnet, dass** die Schichtdicke der SixNy-Schicht, die innerhalb der Low-e-Beschichtung (20) an das Glas (10) angrenzend angeordnet ist, zur Schichtdicke der ersten Kernschicht aus ZnAlOx (23) in einem Verhältnis von 0,8 bis 1,4 steht.

9. Zweifach versilbertes Glas (10) mit Low-e-Beschichtung (20) nach Anspruch 1, **dadurch gekennzeichnet, dass** die Schichtdicke der ZnSnOx-Schicht zur Schichtdicke der SiOxNy-Schicht in einem Verhältnis von 0,1 bis 0,6 steht.

10. Zweifach versilbertes Glas (10) mit Low-e-Beschichtung (20) nach Anspruch 1, **dadurch gekennzeichnet, dass** die Schichtdicke der ZnSnOx-Schicht zur Schichtdicke der SiOxNy-Schicht in einem Verhältnis von 0, 1 bis 0,5 steht.

11. Zweifach versilbertes Glas (10) mit Low-e-Beschichtung (20) nach Anspruch 9, **dadurch gekennzeichnet, dass** die Gesamtschichtdicke der letzten zwei Schichten der Low-e-Beschichtung (20) im Bereich von 33 bis 50 nm liegt.

12. Zweifach versilbertes Glas (10) mit Low-e-Beschichtung (20) nach Anspruch 1, **dadurch gekennzeichnet, dass** die Tageslichtdurchlässigkeit 71 ± 2 und der Sonnenfaktor 43 ± 2 beträgt.

13. Zweifach versilbertes Glas (10) mit Low-e-Beschichtung (20) nach Anspruch 1, **dadurch gekennzeichnet, dass** vor und nach der Wärmebehandlung die Selektivität je nach dem Verhältnis des Durchgangswertes im sichtbaren Bereich zum Solarfaktor bestimmt wird, wobei dieses Verhältnis im Bereich von 1,6 bis 1,7 liegt.

## Revendications

1. Un verre (10) doublement argenté à faible émissivité (20) qui résiste au processus thermique et qui fournit un contrôle solaire efficace avec un faible facteur solaire et qui permet la pénétration de la lumière du jour dans le milieu et qui minimise les pertes d'énergie thermique **caractérisé en ce que** ledit revêtement à faible émissivité (20) comprend SixNy (21) / TiOx (22) / ZnAlOx (23) respectivement comme les trois premières couches vers l'extérieur de la surface du verre (10), ZnAlOx (23) étant une première couche de carottage et la proportion de l'épaisseur de la première couche d'Ag (24) à l'épaisseur de la deuxième couche d'Ag (28) est dans la plage de 0,6 à 1,5. et ledit revêtement à faible émissivité (20) comprend respectivement les suivants après les trois premières couches:
- une première couche réfléchissante infrarouge Ag (24) positionnée sur la première couche de carottage ZnAlOx (23),
- une première couche barrière (25) comprenant du NiCrOx positionné sur la première couche réfléchissante infrarouge (24),
- une structure diélectrique au milieu (26) comprenant du ZnSnOx positionné sur la première couche barrière (25),
- une deuxième couche de carottage (27) comprenant du ZnAlOx positionné sur la structure diélectrique au milieu (26),
- une deuxième couche réfléchissante infrarouge Ag (28) positionnée sur la deuxième couche de carottage (27),
- une seconde couche barrière (29) comprenant du NiCrOx positionné sur la seconde couche réfléchissante infrarouge (28),
- une troisième couche diélectrique (30) comprenant du ZnSnOx positionné sur la deuxième couche barrière (29),
- une structure diélectrique supérieure (31) comprenant du SiOxNy positionné sur la troisième couche diélectrique (30).

2. Verre (10) doublement argenté à faible émissivité (20) selon la Revendication 1, **caractérisé en ce que** l'épaisseur des couches d'Ag du revêtement à faible émissivité (20) est dans la plage de 8,5 à 14,5 nm.

3. Verre (10) doublement argenté à faible émissivité (20) selon la Revendication 1, **caractérisé en ce que** l'épaisseur des couches d'Ag du revêtement à faible émissivité (20) est dans la plage de 10-13 nm.

4. Verre (10) doublement argenté à faible émissivité (20) selon la Revendication 1, **caractérisé en ce que** la proportion de l'épaisseur de la première couche de carottage ZnAlOx (23) du revêtement à faible émissivité (20) à l'épaisseur de la première couche barrière (25) est dans la plage de 12 à 23.

5. Verre (10) doublement argenté à faible émissivité (20) selon la Revendication 1, **caractérisé en ce que** la proportion de l'épaisseur de la deuxième couche de carottage (27) du revêtement à faible émissivité (20) à l'épaisseur de la deuxième couche barrière (29) est dans la plage de 8 à 16.

6. Verre (10) doublement argenté à faible émissivité (20) selon la Revendication 1, **caractérisé en ce que** la proportion du total de l'épaisseur de la première couche de carottage ZnAlOx (23) et de l'épaisseur de la couche SixNy, positionnée dans le verre (10) à proximité du revêtement à faible émissivité (20), par rapport à la couche TiOx l'épaisseur prévue entre les deux couches est dans la plage de 4 à 7.

7. Verre (10) doublement argenté à faible émissivité (20) selon la Revendication 1, **caractérisé en ce que** la proportion d'épaisseur de la couche SixNy, positionnée à proximité du verre (10) du revêtement à faible émissivité (20), à l'épaisseur de la première couche de carottage ZnAlOx (23) est dans la plage de 0,6-1,6 .

8. Verre (10) doublement argenté à faible émissivité (20) selon la Revendication 1, **caractérisé en ce que** la proportion d'épaisseur de la couche SixNy, positionnée à proximité du verre (10) du revêtement à faible émissivité (20), à l'épaisseur de la première couche de carottage ZnAlOx (23) est dans la plage de 0,8 à 1,4..

9. Verre (10) doublement argenté à faible émissivité (20) selon la Revendication 1, **caractérisé en ce que** la proportion de l'épaisseur de ladite couche de ZnSnOx à l'épaisseur de la couche de SiOxNy est dans la plage de 0,1 à 0,6.

10. Verre (10) doublement argenté à faible émissivité (20) selon la Revendication 1, **caractérisé en ce que** la proportion de l'épaisseur de ladite couche de ZnSnOx à l'épaisseur de la couche de SiOxNy est dans la plage de 0,1 à 0,5.

11. Verre (10) doublement argenté à faible émissivité (20) selon la Revendication 9, **caractérisé en ce que** l'épaisseur totale des deux dernières couches du revêtement à faible émissivité (20) est dans la plage de 33 à 50 nm.

12. Verre (10) doublement argenté à faible émissivité (20) selon la Revendication 1, **caractérisé en ce que** la transmittance de la lumière du jour est de 71 ± 2 et le facteur solaire est de 43 ± 2.

13. Verre (10) doublement argenté à faible émissivité (20) selon la Revendication 1, **caractérisé en ce qu'**avant et après le processus thermique, la sélectivité est définie comme la proportion de la valeur de transmittance de la région visible au facteur solaire est entre 1,6 et 1,7.
